# EUROPÄISCHE PATENTSCHRIFT

(11) **EP 0 555 456 B1**
(45) Veröffentlichungstag und Bekanntmachung des Hinweises auf die Patenterteilung: **23.04.1997**
(21) Anmeldenummer: 92918786.2
(22) Anmeldetag: 04.09.1992
(51) Int. Cl.: H04L 12/40, H04J 3/26, B60R 16/02

(54) **VERFAHREN ZUR DATENÜBERTRAGUNG UND DATENVERARBEITUNGSANLAGE MIT VERTEILTEN RECHNERKNOTEN**
DATA TRANSMISSION PROCESS AND DATA PROCESSING SYSTEM WITH DISTRIBUTED COMPUTING NODES
PROCEDE DE TRANSMISSION DE DONNEES ET INSTALLATION DE TRAITEMENT DE DONNEES POURVU DE NOEUDS DE CALCUL REPARTIS

(30) Priorität: 04.09.1991 DE 4129412
(43) Veröffentlichungstag der Anmeldung: 18.08.1993
(73) Patentinhaber: NEC Corporation, Minato-ku, Tokyo 108-01 (JP)
(72) Erfinder: TURSKI, Klaus, D-4000 Düsseldorf 11 (DE)
(74) Vertreter: Glawe, Delfs, Moll & Partner
(86) Internationale Anmeldenummer: EP9202046
(87) Internationale Veröffentlichungsnummer: WO9305601

(56) Entgegenhaltungen:
- EP-A- 0 149 498
- EP-A- 0 228 078
- EP-A- 0 444 656
- US-A- 4 716 410

## Beschreibung

Die Erfindung betrifft ein Verfahren zur Datenübertragung in einer Datenverarbeitungsanlage und eine Datenverarbeitungsanlage mit verteilten, untereinander über einen seriellen Daten-bus kommunizierenden Rechnerknoten, zwischen denen Objekte ausgetauscht werden, die in einem Rechnerknoten auf ihrer Akzeptanz geprüft, zwischengespeichert und danach abgespeichert werden.

Datenverarbeitungsanlagen mit verteilten Rechnerknoten, die über einen seriellen Daten-BUS verbunden sind, finden überwiegend in industriellen oder automobilen lokalen Netzen Anwendung. Die Rechnerknoten umfassen dabei Datenverarbeitungsgeräte oder Signalverarbeitungsgeräte, die zu einer bestimmten Anwendung bestimmt sind. Hierzu zählt der Datenaustausch zwischen Steuergeräten, Sensoren und Stellern. Derartige lokale Netze arbeiten meist unter Echtzeitbedingungen, d.h. Rechenoperationen und Steuereingriffe müssen prozeßbegleitend in bestimmten Zeitfenstern erfolgen. Die jeweiligen Prozeßparameter müssen dabei rechtzeitig zu den einzelnen Rechnerknoten übertragen werden, um einen optimalen Prozeßablauf zu gewährleisten. Für ein lokales Netzwerk bedeutet dies, daß die Rechnerknoten ausreichende Verarbeitungskapazität zur Verfügung stellen.

Ein Beispiel für die oberen definierten Datenverarbeitungsanlagen ist das Controller Area Network (CAN), das ein Defacto-Standardprotokoll festlegt. CAN ist dem Open System Interconnection (OSI)-Referenzmodell angelehnt, das für offene Systeme empfohlen wird, die jederzeit um weitere Teilnehmer bzw. Rechnerknoten erweitert werden können. CAN unterscheidet verschiedene Ebenen, wie die physikalische Ebene, die Transferebene und die Objektebene. Die physikalische Ebene definiert im wesentlichen, wie Signale übertragen werden. Parameter dazu sind das übertragungsmedium und die Signalpegel. Die Transferebene enthält den Kern des CAN-Protokolls. Sie bildet das Bindeglied zwischen der Objektebene und der physikalischen Ebene und ist verantwortlich für das Bit-Timing, die Synchronisation, die Festlegung des Objekt- bzw. Botschaftsrahmens, Übertragungsbestätigungen, Fehlererkennung und -behandlung sowie für die Arbitrierung, d.h. die Konfliktlösung, wenn mehrere Rechnerknoten gleichzeitig Zugriff auf den BUS nehmen. Die Objektebene schließlich ist verantwortlich für die Objekt-bzw. Botschaftsfilterung sowie für die Behandlung der Objekte, die einer übergeordneten Anwendungsebene zugeordnet sind. Objekte bzw. Botschaften werden dabei in beiden Richtungen von und zu verschiedenen Anwendungsebenen über den BUS und jeweils zwischengeschaltete physikalische Ebenen, Transferebenen und Objektebenen übertragen. Die physikalische Ebene und die Objektebene können abhängig von der jeweiligen Implementierung variieren.

Die Grundidee des CAN-Protokolls basiert auf der Vorstellung eines gemeinsamen virtuellen Datenspeichers für alle Knoten einer oben definierten Datenverarbeitungsanlage, bei dem das Netzwerk durch seinen Aufbau die Aufgabe übernimmt, die Daten dieses gemeinsamen virtuellen Speichers zu aktualisieren. Nach dem Protokoll werden die von einem Knoten über das Netz zu übertragenden Daten zu Mitteilungen bzw. Objekten zusammengefaßt, die einem Datenrahmen entsprechen. Im Datenrahmen sind verschiedene Felder definiert, die beispielsweise den Beginn und das Ende des Rahmens angeben und das eigentliche Datenfeld festlegen. Jedes Objekt, das durch den Datenrahmen festgelegt ist, enthält nach einem Start-Bit des Rahmens einen Kopfteil (Identifier), der den Datennamen und eine Priorität des Objekts festlegt, durch die der Zugang zum BUS bestimmt wird. Der Wert des Kopfteils bestimmt also die kollisionsfreie Arbitrierung auf dem Netzwerk. Nach dem CAN-Protokoll ist der Kopfteil 11 Bit lang.

Die über den BUS zu übertragenden Mitteilungen bzw Objekte müssen innerhalb eines Rechnerknotens verwaltet werden. Die Übertragung selbst ist dabei eine Breitbandübertragung, d.h. ohne Adressierung eines bestimmten Empfangsknotens. Ein auf dem BUS zu übertragendes Objekt gelangt deshalb zunächst an sämtliche potentiellen Empfänger, die dann entscheiden müssen, welche Mitteilungen bzw. Objekte aus dem Nachrichtenstrom jeweils empfangen werden sollen. Das Herausfiltern der jeweils wichtigen Objekte aus dem Nachrichtenstrom erfolgt anhand der Kopfteile der Objekte.

Für die in der Objektebene stattfindende Filterung der Objekte auf Akzeptanz und die Priorität zur Beurteilung sind Steuerungseinrichtungen bekannt, die grundsätzlich nach zwei verschiedenen Optimierungsansätzen arbeiten. Diese Optimierungsansätze beziehen sich auf unterschiedliche Implementierungen der Objektebene, für die sich die Bezeichnungen Voll-CAN (Full CAN) und Basis CAN (Basic CAN) durchgesetzt haben.

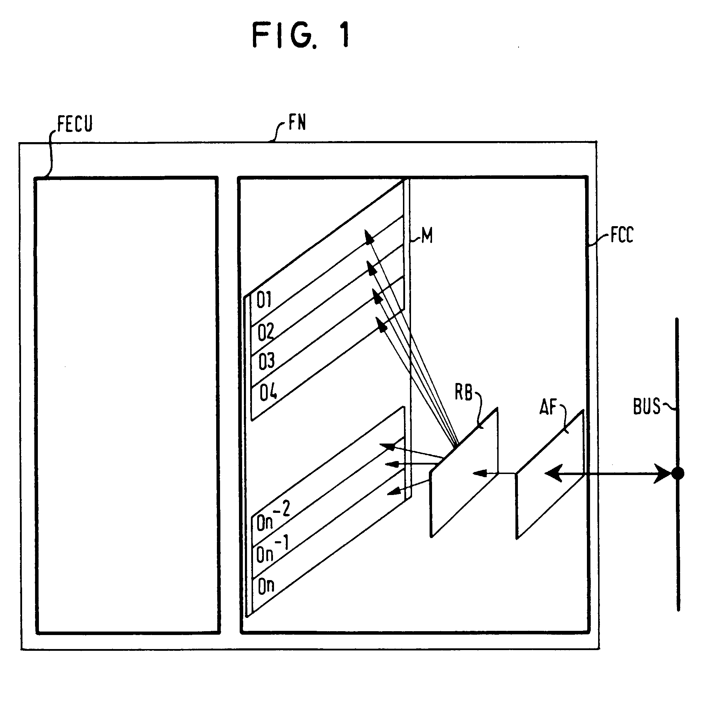

Ein Beispiel für eine Voll-CAN-Implementierung ist aus der DE-PS 35 06 118 bekannt. Die implementierte Objektebene führt die gesamte Daten- bzw. Objektverwaltung auf dem Netz unabhängig von der angeschlossenen Zentraleinheit (CPU) des Rechnerknotens aus. Dies ist in Fig. 1 dargestellt. Der Rechnerknoten FN enthält eine elektronische Kontrolleinheit FECU mit einer Zentraleinheit und eine Steuereinrichtung FCC. Die Steuereinrichtung ist mit dem Daten-BUS verbunden und enthält ein Akzeptanz-Filter AF, einen Empfangspuffer RB und einen Speicher M. Auf dem BUS übertragene Daten gelangen zunächst zu dem Akzeptanz-Filter AF, das prüft, ob die Objekte für die Verwaltung im Rechnerknoten bestimmt sind. Über den Empfangspuffer RB werden die Objekte dann einzelnen Adressen des Speichers M zugeordnet. Die Verwaltung der Objekte 01,02,...0n im Speicher M wird von der Steuereinrichtung FCC übernommen. Der Speicher M ist dabei als Zweitorspeicher (Dual Port Memory) ausgelegt, der die Objekte bzw. die Objektdaten der Zentraleinheit in der elektronischen Steuereinrichtung FECU und andererseits dem BUS zur Verfügung stellen kann.

Die Veröffentlichung M. Litschel et. al : "CAN-Chip übernimmt Datenaustausch im Kfz" Elektronik Information Nr. 3, 1988, S. 46 bis 53, beschreibt einen Voll-CAN-Controller mit einem Speicherbereich, in dem statische Kommunikationsobjekte definiert sind, die als Sende-/Empfangspuffer für Botschaften dienen. Einem Kommunikationsobjekt ist eindeutig eine Botschaft durch den im Objekt festgelegten Kopfteil (Identifier) zugeordnet.

USP 4,964,076 beschreibt eine Voll-CAN-Implementierung, bei der ein Akzeptanzfilter statisch definierte Botschaften erkennt und in Empfangspuffern zwischenspeichert, die jeweils einem Objekt statisch zugeordnet sind. Einzelheiten des Akzeptanzfilters sind nicht angegeben.

Die Anordnung gemäß Fig. 1 hat den Vorteil, daß keine Leistung der Zentraleinheit für die Objektverwaltung erforderlich ist, jedoch steht dem bei den bekannten Steuereinrichtungen der Nachteil gegenüber, daß nur eine sehr begrenzte Anzahl von Objekten bzw. Mitteilungen verwaltet werden kann. Da jede einzelne Empfangs- bzw. Sendemitteilung als ein statisches Objekt im Speicher geführt wird, das einen entsprechenden Speicherbereich belegt, selbst wenn ein Objekt nur sehr selten oder nur in Ausnahmesituationen auftritt, ist die mögliche Anzahl von Objekten durch die Speicherfähigkeit des Zweitorspeichers, d.h. die Integrationsdichte beschränkt.

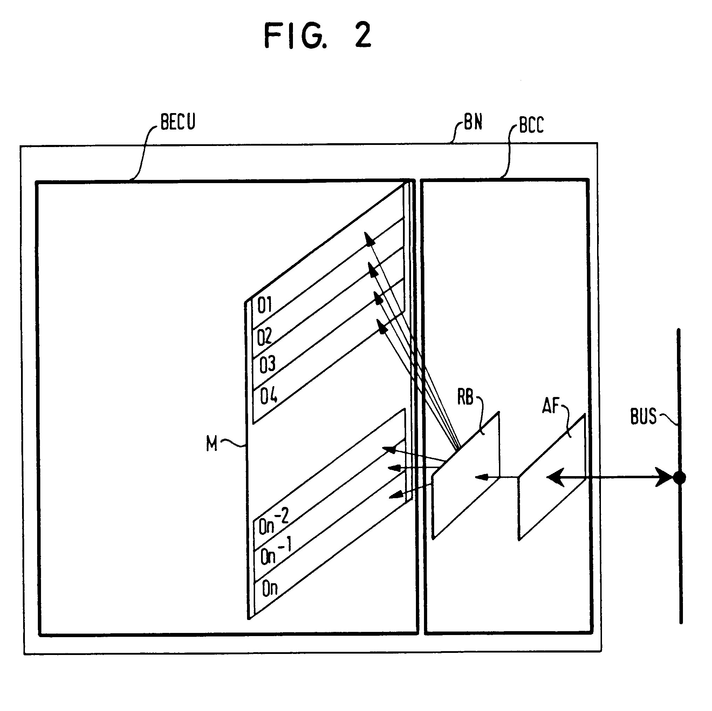

Bei der Basis-CAN-Implementierung übernimmt die in der elektronischen Kontrolleinheit enthaltene Zentraleinheit die gesamte Objektverwaltung, Fig. 2. Ein Rechnerknoten BN mit einer elektronischen Steuereinheit BECU, die eine Zentraleinheit und einen Speicher M enthält, weist weiterhin eine Steuereinrichtung BCC auf. Die Steuereinheit BCC übernimmt die Vermittlung der Objekte zwischen dem BUS der elektronischen Steuereinheit BECU. Die Steuereinheit enthält dabei ein Akzeptanz-Filter AF und einen Eingangspuffer RB. Nach Durchlaufen dieser beiden Elemente wird ein empfangenes Objekt in den von der Zentraleinheit verwalteten Speicher M abgespeichert. Die Objekte sind in dem Speicher Adreßbereichen zugeordnet. Selbstverständlich können auf umgekehrtem Weg Objekte von der Zentraleinheit an den BUS übertragen werden.

Die Verwaltung der Objekte erfolgt in diesem Fall dynamisch und bietet den Vorteil eines reduzierten Schaltungsaufwandes bei einer theoretisch unabeschränkten Anzahl von zu verwaltenden Objekten. Je nach Objektkonfiguration muß die Zentraleinheit nicht interessierende, aber häufig auftretende Objekte neben weniger häufig auftretenden, aber besonders interessierenden Objekten verwalten. Bei einer ungünstigen Objektkonfiguration und einer hohen BUS-Last ist die Zentraleinheit sehr stark ausgelastet. Durch die Belastung mit zum Teil nebensächlichen Verwaltungsaufgaben kann die Zentraleinheit möglicherweise keine ausreichend große Kapazität für die Verwaltung und Verarbeitung wichtiger Funktionen aufweisen.

Bei heutigen Steuereinrichtungen, beispielsweise dem Baustein PCA82C200 der Fa. Phillips, ist nur ein Akzeptanzfilter AF vorgesehen, das je nach Lage der zu empfangenden Objekte eines Rechnerknotens im Objekt- bzw. Adressraum des Speichers zu einer unzureichenden Vorfilterung führt. Ein übliches Akzeptanz-Filter besitzt die Bitbreite 8 und enthält verschiedene Register. Ein Register ist für ein 8-Bit Codewort vorgesehen, ein anderes für ein Maskenwort. Das Codewort und das Maskenwort werden miteinander logisch verknüpft, wodurch sich ein Vergleichswort ergibt, das mit den 8 am höchsten gewichteten Bits des 11-Bit langen Kopfteils eines Objektes bzw. einer BUS-Mitteilung verglichen wird. Entsprechend der vorgegebenen Vergleichsprozedur werden Objekte, bei denen der Vergleich positiv ausfällt, in den Empfangspuffer eingeschrieben und somit akzeptiert. Diese Objekte müssen von der angeschlossenen Zentraleinheit weiterverarbeitet und verwaltet werden. Es ist unvermeidlich, daß dabei auch Mitteilungen das Akzeptanz-Filter passieren, die von dem Rechnerknoten eigentlich nicht empfangen werden sollten und deshalb von der Zentraleinheit verwaltet, aber verworfen werden müssen. Hat beispielsweise der Knoten eine Mitteilung zu empfangen, die in unmittelbarer Nähe zu einer häufigen Mitteilung liegt, die nicht empfangen werden muß, aber in das Fenster des Akzeptanz-Filters fällt, so muß die Zentraleinheit das Objekt zunächst empfangen und danach verwerfen.

Aus der vorstehenden Implementierung ergibt sich der Nachteil, daß die kleinste Menge von Objekten, die aufgrund der Anordnung des Akzeptanz-Filters zum Empfang freigegeben werden kann, aus 8 benachbarten Objekten besteht. Dies kann bei ungünstiger Objektkonfiguration und -häufigkeit zu einer unerwünscht hohen Belastung der Zentraleinheit führen. Weiterhin besteht der Nachteil, daß die Topologie des Akzeptanz-Filters sehr unflexibel ist. Es lassen sich nur Durchlaßbereiche definieren, die eine feste Breite besitzen und sich periodisch im Adreß- bzw. Kopfteilraum der Objekte fortsetzen lassen. Die bekannte starre Topologie führt deshalb ebenfalls zu einer u.U. unerwünscht hohen Belastung der Zentraleinheit.

Der Erfindung liegt die Aufgabe zugrunde, ein Verfahren zur Datenübertragung und eine Datenverarbeitungsanlage der eingangs genannten Art vorzusehen, mit dem sich bei dynamischer Objektverwaltung die Belastung der Zentraleinheit verringern läßt und das eine für einen jeweiligen Rechnerknoten optimale Konfiguration zur Objektverwaltung ermöglicht.

Diese Aufgabe wird bei einem Verfahren zur Datenübertragung mit den Merkmalen des Patentanspruches 1 und bei einer Datenverarbeitungsanlage mit den Merkmalen des Patentanspruches 4 gelöst.

Die Erfindung bietet den Vorteil, daß der Gesamtstrom an Empfangsmitteilungen sich auf mehrere Empfangspuffer verteilen läßt. Für häufige Empfangsmitteilungen, die einen hohen Verwaltungsaufwand bei dynamischer Objektverwaltung erfordern, lassen sich exklusive Empfangspuffer spezifizieren, die eine quasi statische Objektverwaltung ermöglichen, so daß die Zentraleinheit diese Mitteilungen nur bei Bedarf zu lesen braucht und nicht bei jedem Empfang verwalten muß. In ähnlicher Weise erlaubt die Mehrzahl von Akzeptanz-Filtern eine Anpassung der jeweiligen Topologien an den speziellen Rechnerknoten. Hierzu zählt die Möglichkeit, Durchlaß- und Sperrfilter zu definieren, mehrere Akzeptanz-Filter einem Empfangspuffer zuzuordnen und die Akzeptanz-Filter hierarchisch anzuordnen. Durch die jeweilige Ausgestaltung entsprechend den Anforderungen eines Rechnerknotens und eine wahlfreie Zuordnung der Akzeptanz-Filter zu den Empfangspuffern kann eine für den jeweiligen Rechnerknoten entsprechend seinen Anforderungen optimale Konfiguration zur Objektverwaltung verwirklicht werden, so daß die nachgeschaltete Zentraleinheit trotz dynamischer Objektverwaltung niedrig belastet und damit für andere Aufgabe frei bleibt.

Ausgestaltungen der Erfindung sind in Unteransprüchen gekennzeichnet.

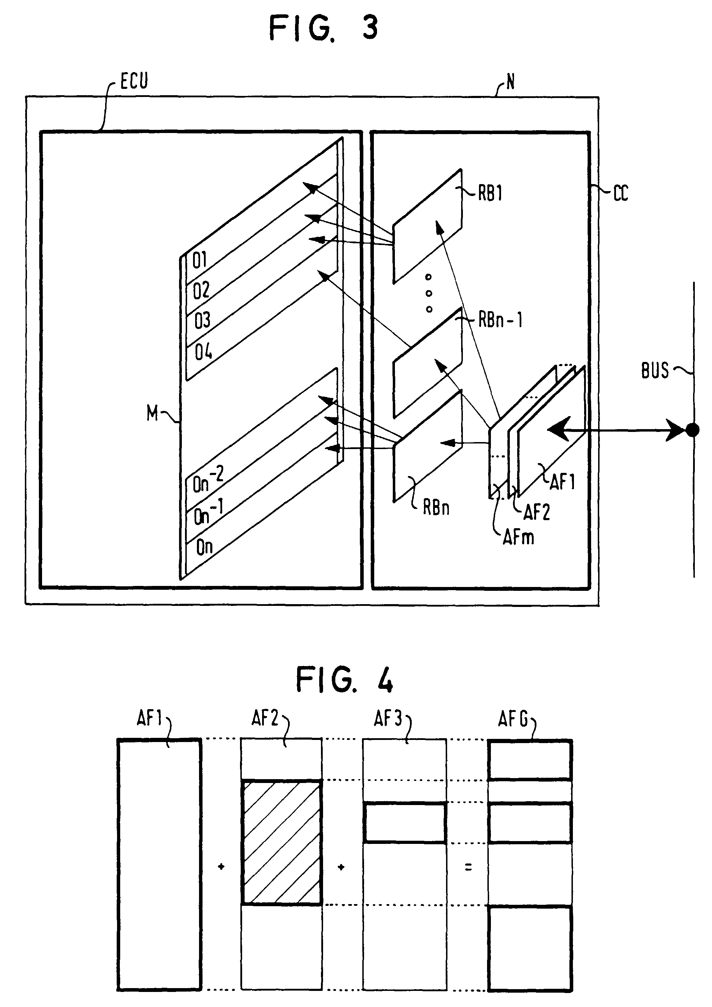

Die Erfindung wird nachfolgend anhand der Fig. 3 und 4 der Zeichnung beschrieben. Es zeigen:
- Fig. 1: einen bekannten Rechnerknoten mit Voll-CAN-Implementierung,
- Fig. 2: einen bekannten Rechnerknoten mit Basis-CAN-Implementierung,
- Fig. 3: einen Rechnerknoten mit erfindungsgemäßer Implementierung der Steuereinrichtung und
- Fig. 4: ein Beispiel für die Zuordnung mehrerer Akzeptanz-filter zu einem Eingangspuffer.

Gemäß Fig. 3 weist der Rechnerknoten N eine Steuereinrichtung CC und eine elektronische Steuereinheit ECU mit einer nicht dargestellten Zentraleinheit und einem Speicher M auf. Die Steuereinrichtung CC enthält m Akzeptanz-Filter und n Empfangspuffer. Jedes Akzeptanz-Filter AF1,AF2 bis AFm enthält zwei Register mit 16-Bit Breite, die den 11-Bit Breitenkopfteil (Identifier) eines Objekts bzw. einer 11-Bit Breite Maske sowie jeweils zusätzliche Steuer-Bits beinhalten. Mit Hilfe eines Teils der Steuer-Bits läßt sich jedes Filter als Durchlaß- oder als Sperrfilter definieren. Weitere Steuer-Bits sind für einen Empfangspufferzeiger vorgesehen, dessen Bit-Breite durch den dualen Logarithmus der n Empfangspuffer gegeben ist. Der Empfangspufferzeiger ordnet das jeweilige Filter einem der n Empfangspuffer zu. Diese Zuordnung kann wahlfrei erfolgen. Einem Empfangspuffer RB1 bis RBn können mehrere Akzeptanz-filter AF1 bis AFm zugeordnet sein.

Eine hierarchische Anordnung der Akzeptanz-Filter in Verbindung mit einer Mehrfachzuordnung mehrerer Akzeptanz-Filter zu einem Empfangspuffer ermöglichen es, einen Durchlaßbereich für das in den Speicher M einzuspeichernde Objekt zu definieren, der sich aus der Überlagerung von mehreren Durchlaß- und Sperrfenstern einzelner Akzeptanz-Filter zusammensetzt. Ein derartiges Beispiel ist in Fig. 4 gezeigt. Aus den Charakteristiken der Filter AF1,AF2 und AF3 ergibt sich eine Gesamtcharakteristik, wie sie für ein Filter AFG gilt. Dabei ist berücksichtigt, daß die Filter AF1 und AF3 Fenster mit einem Durchlaßbereich definieren, während das Filter AF2 ein Fenster als Sperrbereich definiert.

Da jedes Akzeptanz-Filter über die volle Bit-Breite eines Kopfteils eines verfügt, beträgt die minimale Fensterbreite eines derartigen Akzeptanz-Filters 1, d.h. einzelne Mitteilungen sind spezifizierbar. Es versteht sich von selbst, daß je nach Wahl der 11 Masken-Bits andere Fensterbreiten definiert werden können. Auf diese Weise ergibt sich eine sehr flexible Topologie des Akzeptanz-Fensters im Akzeptanz-Filter.

Wie anhand von Fig. 3 deutlich wird, läßt sich der Gesamtstrom an Empfangsobjekten mit Hilfe der Akzeptanz-Filter auf mehrere Empfangspuffer verteilen. Durch die Wahl der Anordnung der Akzeptanzfilter besteht bei einer hierarchischen Filterstruktur die Möglichkeit, in Verbindung mit der Definition von Akzeptanz-Filtern als Durchlaß- oder Sperrfilter und einer Mehrfachzuordnung mehrerer Akzeptanz-Filter zu einem Empfangspuffer, sehr flexibel erwünschte Objekte von unerwünschten Objekten zu trennen. Nicht erwünschte Objekte brauchen im Rechnerknoten nicht verwaltet werden und können deshalb nicht zu einer Belastung der Zentraleinheit führen.

Für häufige Empfangsobjekte, die bei einer Struktur gemäß Fig. 3 mit dynamischer Objektverwaltung einen hohen Verwaltungsaufwand erfordern, lassen sich exklusive Eingangspuffer spezifizieren, die statischen Empfangsobjekten gleichgestellt sind. Die nachgeschaltete Zentraleinheit braucht diese Objekte nur bei Bedarf zu lesen, aber nicht bei jedem Empfang zu verwalten. Diese Objekte können nicht durch andere Empfangsmitteilungen überschrieben werden.

Durch die wahlfreie Zuordnung der Akzeptanz-Filter zu den Empfangspuffern kann eine für den jeweiligen Netzwerkknoten optimale Konfiguration zur Verwaltung der Empfangsobjekte realisiert werden. Daraus ergibt sich, daß die Zentraleinheit in der elektronischen Steuereinheit ECU bei der dynamischen Objektverwaltung erheblich entlastet werden kann. Nach Nachselektion im Sinne einer Nachfilterung von nicht erwünschten Empfangsmitteilungen kann weitgehend vermieden werden.

Mit Hilfe einzelner, exklusiv spezififierter Empfangspuffer, die statischen Empfangsobjekten zugeordnet sind, läßt sich die Leistungsfähigkeit einer Implementierung gemäß einem Voll-CAN-Rechnerknoten erreichen, wobei jedoch keine Beschränkung hinsichtlich einer Begrenzung der Gesamtzahl verwaltbarer Objekte besteht.

## Patentansprüche

1. Verfahren zur Datenübertragung in einer Datenverarbeitungsanlage mit verteilten, untereinander über einen seriellen Daten-Bus (BUS) kommunizierenden Rechnerknoten (N), zwischen denen Objekte ausgetauscht werden, bei dem an einem Rechnerknoten (N) empfangene Objekte mit Hilfe einer Steuereinrichtung (CC) auf ihre Akzeptanz geprüft sowie zwischengespeichert und danach in einem einer Zentraleinheit (ECU) zugeordneten Speicher (M) abgespeichert werden,
**gekennzeichnet durch** folgende Schritte:
mehrere hierarchisch angeordnete Akzeptanz-Filter (AF1, AF2, AFm) werden wahlfrei mehreren Empfangspuffern (RB1, RBn-1, RBn), die jeweils für den Empfang mehr als eines Objektes vorgesehen sind, zugeordnet;
die volle Bitbreite eines in einem Objekt vorhandenen Kopfteils (Identifier) wird von den hierarchisch angeordneten Akzeptanz-Filtern (AF1, AF2, AFm) geprüft;
ein akzeptiertes Objekt wird in einem der den Akzeptanz-Filtern (AF1, AF2, AFm) zugeordneten Empfangspuffer (RB1, RBn-1, RBn) zvischengespeichert und
das von dem Empfangspuffer (RB1, RBn-1, RBn) zwischengespeicherte Objekt wird im Speicher (M) der Zentraleinheit (ECU) abgespeichert.

2. Verfahren nach Anspruch 1,
**dadurch gekennzeichnet**,
daß die Zuordnung eines Empfangspuffers (RB1, RBn-1, RBn) zu einem Akzeptanz-Filter (AF1, AF2, AFm) mit Hilfe eines Empfangspufferzeigers des Akzeptanz-Filters (AF1, AF2, AFm) erfolgt.

3. Verfahren nach einem der Ansprüche 1 oder 2,
**dadurch gekennzeichnet**,
daß zu jedem Akzeptanz-Filter (AF1, AF2, AFm) ein Durchlaßbereich oder ein Sperrbereich definierbar ist.

4. Datenverarbeitungsanlage mit verteilten, untereinander über einen seriellen Daten-Bus (BUS) kommunizierenden Rechnerknoten (N), zwischen denen Objekte ausgetauscht werden, wobei ein Rechnerknoten (N) eine Steuereinrichtung (CC) zur Akzeptanzprüfung und Zwischenspeicherung auf dem Bus (BUS) übertragener Objekte und eine Zentraleinheit (ECU) mit einem Speicher (M) zur Abspeicherung akzeptierter Objekte enthält,
**dadurch gekennzeichnet**,
daß die Steuereinrichtung (CC) eine Mehrzahl hierarchisch angeordneter Akzeptanz-Filter (AF1, AF2, AFm) zur Prüfung der vollen Bitbreite eines in einem Objekt vorhandenen Kopfteils (Identifier) und eine Mehrzahl, den Akzeptanz-Filtern (AF1, AF2, AFm) wahlfrei zugeordnete Empfangspuffer (RB1, RBn-1, RBn) enthält, die jeweils für den Empfang mehr als eines Objektes vorgesehen sind, so daß die Zwischenspeicherung eines akzeptierten Objektes in einem der den Akzeptane-Filtern (AF1, AF2, AFm) zugeordneten Empfangspuffer (RB1, RBn-1, RBn) erfolgt, und daß von dem Empfangspuffer (RB1, RBn-1, RBn) zwischengespeicherte Objekt im Speicher (M) der Zentraleinheit (ECU) abgespeichert wird.

5. Datenverarbeitungsanlage nach Anspruch 4,
**dadurch gekennzeichnet**,
daß jedes Akzeptanz-Filter (AF1, AF2, AFm) zwei Register für einen Kopfteil (Identifier) eines Objektes bzw. eine Maske mit der Bit-Breite des Kopfteils sowie für zusätzliche Steuer-Bits enthält.

6. Datenverarbeitungsanlage nach Anspruch 5,
**dadurch gekennzeichnet,**
daß jedes Akzeptanz-Filter (AF1, AF2, AFm) mit Hilfe eines Teiles der Steuer-Bits als Durchlaß- oder Sperrfilter definierbar ist.

7. Datenverarbeitungsanlage nach einem der Ansprüche 4 bis 6,
**dadurch gekennzeichnet**,
daß die Empfangspuffer (RB1, RBn-1, RBn) die Bit-Breite des Kopfteils der Objekte aufweisen.

8. Datenverarbeitunganlage nach einem der Ansprüche 4 bis 7,
**dadurch gekennzeichnet,**
daß jedes Akzeptanz-Filter (AF1, AF2, AFm) einen Empfangspufferzeiger enthält, mit dem die Zuordnung des Akzeptanz-Filters (AF1, AF2, AFm) zu einem Empfangspuffer (RB1, RBn-1, RBn) erfolgt.

9. Datenverarbeitungsanlage nach einem der Ansprüche 4 bis 8,
**dadurch gekennzeichnet**,
daß eine Mehrfachzuordnung mehrer Akzeptanz-Filter (AF1, AF2, AFm) zu einem Empfangspuffer (RB1, RBn-1, RBn) vorgesehen ist.

10. Datenverarbeitungsanlage nach einem der Ansprüche 4 bis 9,
**dadurch gekennzeichnet**,
daß mehrere Akzeptanz-Filter (AF1, AF2, AFm) nacheinander zur Prüfung eines Objektes dienen.

## Claims

1. Process for the transmission of data in a data processing system with distributed computing nodes (N) communicating with one another via a serial data bus and between which objects can be exchanged, in which process received objects are tested at a computing node (N) for their acceptance with the aid of a control device (CC) and also temporarily stored and are thereafter stored in a memory (M) allocated to a central processing unit (ECU),
**characterised by** the following steps:
a plurality of hierarchically arranged acceptance filters (AF1, AF2, AFm) are randomly allocated to a plurality of receiving buffers (RB1, RBn-1, RBn), which in each case are provided to receive more than one object;
the full bit width of a head part (identifier) present in an object is tested by the hierarchically arranged acceptance filters (AF1, AF2, AFm);
an accepted object is temporarily stored in a receiving buffer (RB1,RBn-1,RBn) allocated to the acceptance filters, and
the object temporarily stored by the receiving buffer (RB1,RBn-1,RBn) is stored in the memory (M) of the central processing unit (ECU).

2. Process according to claim 1,
**characterised in that**
the allocation of a receiving buffer (RB1,RBn-1,RBn) to an acceptance filter (AF1,AF2,AFm) is effected with the aid of a receiving buffer indicator of the acceptance filter.

3. Process according to one of claims 1 or 2,
**characterised in that**
a pass band or a stop band can be defined to each acceptance filter (AF1,AF2,AFm).

4. Data processing system with distributed computing nodes (N) communicating with one another via a serial data bus (BUS) and between which objects can be exchanged, a computing node (N) containing a control device (CC) to test acceptance and for temporary storage of objects transmitted on the bus (BUS) and a central processing unit (ECU) with a memory (M) for storing accepted objects,
**characterised in that**
the control device (CC) contains a plurality of hierarchically arranged acceptance filters (AF1,AF2,AFm) for testing the full bit width of a head part (identifier) present in an object and a plurality of receiving buffers (RB1,RBn-1,RBn) which are randomly allocated to the acceptance filters (AF1,AF2,AFm) and provided in each case to receive more than one object, and thus the temporary storage of an accepted object in one of the receiving buffers (RB1,RBn-1,RBn) allocated to the acceptance filters (AF1,AF2,AFm) takes place, and the object temporarily stored by the receiving buffer (RB1,RBn-1,RBn) is stored in the memory (M) of the central processing unit (ECU).

5. Data processing system according to claim 4,
**characterised in that**
each acceptance filter (AF1,AF2,AFm) has two registers for a head part (identifier) of an object or a mask with the bit width of the head part and for additional control bits.

6. Data processing system according to claim 5,
**characterised in that**
each acceptance filter (AF1,AF2,AFm) can be defined with the aid of a portion of the control bits as a pass or stop filter.

7. Data processing system according to one of claims 4 to 6,
**characterised in that**
the receiving buffers (RB1,RBn-1,RBn) have the bit width of the head part of the objects.

8. Data processing system according to one of claims 4 to 7,
**characterised in that**
each acceptance filter (AF1,AF2,AFm) contains a receiving buffer indicator with which the allocation of the acceptance filter (AF1,AF2,AFm) to a receiving buffer (RB1,RBn-1,RBn) is effected.

9. Data processing system according to one of claims 4 to 8,
**characterised in that**
a multiple allocation of a plurality of acceptance filters (AF1,AF2,AFm) to a receiving buffer (RB1,RBn-1,RBn) is provided.

10. Data processing system according to one of claims 4 to 9,
**characterised in that**
a plurality of acceptance filters (AF1,AF2,AFm) one after the other serve to test an object.

## Revendications

1. Procédé de transmission de données dans une installation de traitement de données avec des noeuds de calcul (N) répartis, communiquant entre eux par l'intermédiaire d'un bus (BUS) de données série et entre lesquels on permute des objets, dans lequel les objets reçus à un noeud de calcul (N) sont vérifiés du point de vue de leur acceptation, à l'aide d'un dispositif de commande (CC), sont mis dans une mémoire intermédiaire et sont ensuite stockés dans une mémoire (M) affectée à une unité centrale (ECU), caractérisé par les étapes suivantes :
plusieurs filtres d'acceptation (AF1, AF2, AFm) disposés hiérarchiquement sont affectés librement à plusieurs mémoires-tampons de réception (RB1, RBn-1, RBn) qui sont prévues respectivement pour la réception de plus d'un objet ;
la largeur complète de bits d'un titre (identificateur) existant dans l'objet est vérifiée par les filtres d'acceptation (AF1, AF2, AFm) disposés hiérarchiquement ;
un objet accepté est stocké provisoirement dans une mémoire-tampon de réception affectée aux filtres d'acceptation (AF1, AF2, AFm) et l'objet stocké provisoirement par la mémoire-tampon de réception (RB1, RBn-1, RBn) est mémorisé dans la mémoire (M) de l'unité centrale (ECU).

2. Procédé selon la revendication 1, caractérisé en ce que l'affectation d'une mémoire-tampon de réception (RB1, RBn-1, RBn) à un filtre d'acceptation (AF1, AF2, AFm) a lieu à l'aide d'un indicateur de mémoire-tampon de réception du filtre d'acceptation (AF1, AF2, AFm).

3. Procédé selon la revendication 1 ou la revendication 2, caractérisé en ce qu'une bande passante ou une bande de suppression peut être définie pour chaque filtre d'acceptation (AF1, AF2, AFm).

4. Installation de traitement de données comportant des noeuds de calcul (N) répartis, communiquant entre eux par l'intermédiaire d'un bus (BUS) de données série et entre lesquels on permute des objets, un noeud de calcul (N) comportant une unité de commande (CC) pour le contrôle de l'acceptation et la mémorisation intermédiaire sur le bus (BUS) d'objets transmis ainsi qu'une unité centrale (ECU) avec une mémoire (M) pour mémoriser les objets acceptés, caractérisée en ce que le dispositif de commande (CC) comporte plusieurs filtres d'acceptation (AF1, AF2, AFm) disposés hiérarchiquement pour le contrôle de la largeur de bits complète d'un titre (identificateur) existant dans un objet et plusieurs mémoires-tampons de réception (RB1, RBn-1, RBn) affectées librement aux filtres d'acceptation (AF1, AF2, AFm) et prévues respectivement pour la réception de plus d'un objet de telle sorte que la mémorisation intermédiaire d'un objet accepté a lieu dans l'une des mémoires-tampons de réception (RB1, RBn-1, RBn) affectées aux filtres d'acceptation (AF1, AF2, AFm) et que l'objet mémorisé provisoirement par la mémoire-tampon de réception (RB1, RBn-1, RBn) est mémorisé dans la mémoire (M) de l'unité centrale (ECU) .

5. Installation de traitement de données selon la revendication 4, caractérisée en ce que chaque filtre d'acceptation (AF1, AF2, AFm) comporte deux registres pour un titre (identificateur) d'un objet ou un masque avec la largeur de bits du titre et pour des bits de commande supplémentaires.

6. Installation de traitement de données selon la revendication 5, caractérisée en ce que chaque filtre d'acceptation (AF1, AF2, AFm) peut être défini à l'aide d'une partie des bits de commande, comme filtre à bande passante ou filtre d'arrêt.

7. Installation de traitement de données selon l'une quelconque des revendications 4 à 6, caractérisée en ce que les mémoires-tampon de réception (RB1, RBn-1, RBn) présentent la largeur de bits du titre des objets.

8. Installation de traitement de données selon l'une quelconque des revendications 4 à 7, caractérisée en ce que chaque filtre d'acceptation (AF1, AF2, AFm) comporte un indicateur de mémoire-tampon de réception à l'aide duquel a lieu l'affectation du filtre d'acceptation (AF1, AF2, AFm) à une mémoire-tampon de réception (RB1, RBn-1, RBn).

9. Installation de traitement de données selon l'une quelconque des revendications 4 à 8, caractérisée en ce qu'il est prévu une affectation multiple de plusieurs filtres d'acceptation (AF1, AF2, AFm) à une mémoire-tampon de réception (RB1, RBn-1, RBn).

10. Installation de traitement de données selon l'une quelconque des revendications 4 à 9, caractérisée en ce que plusieurs filtres d'acceptation (AF1, AF2, AFm) servent successivement à la vérification d'un objet.
